# EUROPEAN PATENT APPLICATION

(11) **EP 4 825 163 A1**
(43) Date of publication of application: **21.10.2026**
(21) Application number: 24926506.7
(22) Date of filing: 12.03.2024
(51) Int. Cl.: A01K 13/00

(54) **HAIR GROOMING DEVICE**

(30) Priority: 28.02.2024 CN 202410221111
(71) Applicant: Ningbo East Environmental Protection Machinery Co., Ltd., Ningbo, Zhejiang 315000 (CN)
(72) Inventor: LI, Ailiang, Ningbo, Zhejiang 315000 (CN); WANG, Jianmin, Ningbo, Zhejiang 315000 (CN)
(74) Representative: Huang, Liwei
(86) International application number: PCT/CN2024/081068
(87) International publication number: WO 2025/179631

(57) **Abstract**

The present disclosure provides a grooming brush device. The grooming brush device includes a housing provided with a first accommodating cavity; a brush body mounted in the first accommodating cavity; an inner plate disposed on the brush body and provided with a first engaging structure; and a push member disposed on the housing and provided with a second engaging structure, where when the brush body and the push member are in a locked state, the second engaging structure engages with the first engaging structure, and when the brush body and the push member are in an unlocked state, the second engaging structure is disengaged from the first engaging structure. In the embodiments of the present disclosure, the brush body is detachably disposed in the accommodating cavity, such that when the user needs to replace the brush body, the user only needs to detach the old brush body and replace it with a new brush body, reducing the user's use cost.

## Description

### CROSS-REFERENCE TO RELATED APPLICATIONS

The present application claims priority to Chinese Patent Application No. 202410221111.9, filed in China on February 28, 2024, the content of which is incorporated herein by reference in its entirety.

### TECHNICAL FIELD

The present disclosure relates to the technical field of pet tools, and in particular, to a grooming brush device.

### BACKGROUND

With the improvement of people's living standards, more and more people keep pets. During the process of keeping pets, pet owners usually use a grooming brush device to groom the hair of pets.

However, at least one of the following problems exists in the related art: Since the brush body of the conventional grooming brush device is fixedly connected to the housing, the brush body of the grooming brush device cannot be replaced. When the brush body is damaged, the user can only replace the entire grooming brush device with a new one, which increases the user's use cost.

### SUMMARY

Therefore, embodiments of the present disclosure provide a grooming brush device, and the brush body of the grooming brush device is detachably connected, such that when a user needs to replace the brush body, the user only needs to detach the old brush body and replace it with a new brush body, thereby reducing the user's use cost.

To solve the above problems, the present disclosure provides a grooming brush device. The grooming brush device includes a housing provided with a first accommodating cavity; a brush body mounted in the first accommodating cavity; an inner plate disposed on the brush body and provided with a first engaging structure; and a push member disposed on/in the housing and provided with a second engaging structure, where when the brush body and the push member are in a locked state, the second engaging structure engages with the first engaging structure, and when the brush body and the push member are in an unlocked state, the second engaging structure is disengaged from the first engaging structure.

Compared with the prior art, the technical effects achieved by adopting this technical solution are as follows: In one aspect, through the engagement between the first engaging structure and the second engaging structure, when the brush body and the push member are in the locked state, the first engaging structure engages with the second engaging structure, and when the brush body and the push member are in the unlocked state, the first engaging structure is disengaged from the second engaging structure, such that the brush body is detachably disposed in the first accommodating cavity. Therefore, when the brush body is damaged, the user only needs to replace the brush body with a new brush body, reducing the user's use cost. In another aspect, the detachable connection between the brush body and the push member enables the user, when the interior of the grooming brush device needs to be cleaned, to only press the push member to separate the first engaging structure from the second engaging structure, and then clean the interior of the grooming brush device, reducing the maintenance cost of the grooming brush device.

In the grooming brush device according to the above technical solution, one of the second engaging structure and the first engaging structure is provided with an engaging hole, the other one is provided with a first protrusion member adapted to the engaging hole, and the engaging hole engages with the first protrusion member to cause the brush body and the push member to be in the locked state.

Compared with the prior art, the technical effects achieved by adopting this technical solution are as follows: In one aspect, the first engaging structure and the second engaging structure enable the brush body to be detachably disposed in the first accommodating cavity through the engagement between the engaging hole and the first protrusion member, thereby facilitating mounting and detachment of the brush body by the user. In another aspect, through the engagement between the engaging hole and the first protrusion member of the first engaging structure and the second engaging structure, when the brush body and the push member are in the locked state, the push member is firmly connected to the inner plate, thereby improving the stability of the brush body when mounted in the first accommodating cavity.

In the grooming brush device according to any one of the above technical solutions, a first limiting member is disposed in the first accommodating cavity, and the first limiting member is provided with a groove; the push member includes a second protrusion member, the second protrusion member is provided with a first spring, and one end of the first spring is connected to the first limiting member; and the push member is provided with a third protrusion member, and the third protrusion member engages with the groove.

Compared with the prior art, the technical effects achieved by adopting this technical solution are as follows: In one aspect, by providing the first spring on the second protrusion member, the push member is capable of automatically rebounding to the initial position after being pressed, reducing the operation difficulty for the user and improving the user experience. In another aspect, by providing the first limiting member to limit the movement range of the push member, the stability of the push member is ensured. The first limiting member is provided with the groove, the push member is provided with the third protrusion member, and the third protrusion member engages with the groove, thereby preventing the push member from falling off the housing and further improving the stability of the push member.

In the grooming brush device according to any one of the above technical solutions, the grooming brush device further includes an ejection assembly disposed in the first accommodating cavity; the ejection assembly includes a second spring, where the second spring is sandwiched between the brush body and the housing to apply, to the brush body, a first elastic force that causes the brush body to disengage from the first accommodating cavity; and a first mating member, where the first mating member is fixedly connected to one end of the second spring; a first mounting portion is provided in the first accommodating cavity, and the first mounting portion is configured for mounting the ejection assembly, such that when the brush body and the push member are in the locked state, the first mating member and the brush body abut against each other, and the second spring is in a compressed state; and when the brush body and the push member are in the unlocked state, the second spring is in a natural length state.

Compared with the prior art, the technical effects achieved by adopting this technical solution are as follows: In one aspect, by providing the ejection assembly to cooperate with the push member, when the user presses the push member, the second spring applies, to the brush body, a first elastic force that causes the brush body to disengage from the first accommodating cavity, such that the ejection assembly pushes up the brush body, thereby facilitating the user in detaching the brush body and improving the convenience of detaching the brush body. In another aspect, the ejection assembly is disposed in the first accommodating cavity, such that when the brush body is in the locked state, the ejection assembly provides stable support for the brush body, further improving the stability of the brush body when mounted in the first accommodating cavity.

In the grooming brush device according to any one of the above technical solutions, the inner plate is provided with a first through hole, the housing is provided with a handheld portion, the handheld portion is provided with a second accommodating cavity, and the second accommodating cavity is in communication with the first accommodating cavity; the brush body includes a push plate, the push plate is provided with a fourth protrusion member, and the fourth protrusion member passes through the first through hole; the grooming brush device further includes a first transmission member disposed in the first accommodating cavity, where when the brush body and the push member are in the locked state, the first transmission member and the fourth protrusion member abut against each other; and a second transmission member disposed in the second accommodating cavity, where one end of the second transmission member is fixedly connected to the first transmission member, and the first transmission member cooperates with the second transmission member to drive the push plate to move close to or away from the inner plate.

Compared with the prior art, the technical effects achieved by adopting this technical solution are as follows: In one aspect, the push plate is provided on the brush body, the push plate is provided with the fourth protrusion member, the inner plate is provided with the first through hole, and the fourth protrusion member passes through the first through hole, such that the push plate moves close to or away from the inner plate, thereby scraping off pet hair wound around the brush body. Therefore, the user does not need to manually remove the pet hair or hair debris on the brush body, improving the user experience. In another aspect, the first transmission member is provided in the first accommodating cavity, the second transmission member is provided in the second accommodating cavity, and the first transmission member is fixedly connected to the second transmission member, such that the user can drive the push plate to move close to or away from the inner plate through the first transmission member. When the user removes pet hair, contact between the user's hand and the pet hair on the brush body is avoided, thereby improving the user experience.

In the grooming brush device according to any one of the above technical solutions, the brush body is provided with a rebound member, where the rebound member includes a support member, and the support member is connected to the fourth protrusion member through a snap-fit connection; and a third spring, where the third spring is sandwiched between the support member and the inner plate, such that when the push plate moves away from the inner plate, the third spring applies, to the push plate, a second elastic force that causes the push plate to move close to the inner plate.

Compared with the prior art, the technical effects achieved by adopting this technical solution are as follows: The brush body is provided with the rebound member, the rebound member is provided with the support member, the support member is connected to the fourth protrusion member through a snap-fit connection, and the third spring is sandwiched between the support member and the inner plate, such that after the user drives the push plate to move away from the inner plate through the first transmission member, the third spring applies, to the push plate, the second elastic force that causes the push plate to move close to the inner plate. Therefore, the push plate is capable of automatically rebounding to a position close to the inner plate, which facilitates operation by the user and improves the user experience.

In the grooming brush device according to any one of the above technical solutions, the brush body includes a first brush head, the first brush head is provided with bristles arranged in an array, and the push plate is provided with a first notch capable of accommodating the bristles.

Compared with the prior art, the technical effects achieved by adopting this technical solution are as follows: In one aspect, by providing the first brush head with bristles arranged in an array, the contact area between the brush body and the pet is increased, and the cleaning efficiency is thus improved. In another aspect, the push plate is provided with the notch capable of accommodating the bristles, such that the push plate is capable of scraping off pet hair wound around the bristles, which facilitates cleaning of the bristles by the user and improves the convenience of cleaning the bristles.

In the grooming brush device according to any one of the above technical solutions, the brush body includes a second brush head provided with a first comb body, and first comb teeth disposed on the first comb body; the push plate includes a second notch capable of accommodating the first comb body; the inner plate includes a second mounting portion, and the second mounting portion is provided with a second limiting member and a third limiting member that engage with each other, where one of the second limiting member and the third limiting member is provided with a first connecting hole, the other one is provided with a first connecting member adapted to the first connecting hole, and the first connecting hole engages with the first connecting member, such that the first comb body is detachably sandwiched between the second limiting member and the third limiting member.

Compared with the prior art, the technical effects achieved by adopting this technical solution are as follows: In one aspect, the second brush head is provided with the comb body, and the comb body is provided with the comb teeth, such that when the user uses the grooming brush device to groom pet hair, skin flakes or foreign matters attached to the pet hair can also be removed, thereby improving the use efficiency of the grooming brush device. In another aspect, the push plate is provided with the second notch for accommodating the comb body, such that the user is capable of removing pet hair wound around the comb body through the push plate, thereby improving the convenience of the grooming brush device. Finally, the first connecting hole engages with the first connecting member, such that the first comb body is detachably sandwiched between the second limiting member and the third limiting member, thereby avoiding replacement of the brush body with a new one by the user when the comb body is damaged, and thus reducing the user's use cost.

In the grooming brush device according to any one of the above technical solutions, the brush body includes a third brush head, and the third brush head includes a second comb body disposed on the inner plate and second comb teeth disposed on the second comb body, where the second comb teeth are provided with bent portions; the push plate includes a first plate member and a second plate member, where the second plate member and the first plate member are connected through a snap-fit connection, and the second plate member is provided with a third notch capable of accommodating the second comb body; and the first plate member cooperates with the second plate member to cause the second plate member to reciprocate in the extension direction of the second comb teeth.

Compared with the prior art, the technical effects achieved by adopting this technical solution are as follows: In one aspect, the third brush head is provided with the second comb body, the second comb body is provided with the second comb teeth, and the second comb teeth are provided with the bent portions, such that when the user uses the grooming brush device to groom pet hair, hair shed from the pet can also be removed, thereby improving the performance of the grooming brush device. In another aspect, the push plate is provided with the first plate member and the second plate member, the second plate member is provided with the third notch for accommodating the second comb body, and the first plate member cooperates with the second plate member to cause the second plate member to reciprocate in the extension direction of the second comb teeth, such that when the user removes pet hair wound around the second comb teeth, the pet hair wound around the bent portions can also be scraped off, thereby improving the convenience of the grooming brush device.

In the grooming brush device according to any one of the above technical solutions, the grooming brush device includes an air supply passage disposed on/in the housing, and the air supply passage is in communication with the first accommodating cavity; the brush body is provided with a first passage, and the first passage is in communication with the first accommodating cavity; and one end, distal to the brush body, of the handheld portion is configured for mounting a vacuum cleaner, such that when the vacuum cleaner performs an air suction operation, the airflow sequentially passes through the first passage, the accommodating cavity, and the air supply passage.

Compared with the prior art, the technical effects achieved by adopting this technical solution are as follows: The housing is provided with the air supply passage in communication with the vacuum cleaner, and the air supply passage is in communication with the first accommodating cavity; the brush body is provided with the first passage, and the first passage is in communication with the first accommodating cavity; and the end, distal to the brush body, of the handheld portion is configured for mounting the vacuum cleaner, such that when the vacuum cleaner performs an air suction operation, the airflow sequentially passes through the first passage, the first accommodating cavity, and the air supply passage. Therefore, the vacuum cleaner collects the hair scraped off from the brush body, thereby avoiding environmental pollution caused by pet hair and transmission of allergens.

After the technical solutions of the present disclosure are adopted, the following technical effects can be achieved:
(1) The present disclosure provides a grooming brush device, where the brush body is detachably disposed in the accommodating cavity, such that when the user needs to replace the brush body, the user only needs to detach the old brush body and replace it with a new brush body, thereby reducing the user's use cost.
(2) The present disclosure provides a grooming brush device, where the first transmission member and the second transmission member drive the push plate to reciprocate in the direction of gravity relative to the inner plate to remove pet hair wound around the brush body, thereby avoiding manual removal of pet hair or hair debris on the brush body by the user and improving the user experience.

### BRIEF DESCRIPTION OF THE DRAWINGS

For clearer descriptions of the technical solutions according to the embodiments of the present disclosure, the drawings to be used in the description of the embodiments are briefly introduced below. It is apparent that the drawings in the description below are only some embodiments of the present disclosure, and for those of ordinary skill in the art, other drawings may be obtained from the drawings without creative efforts.
FIG. 1 is a perspective view of a grooming brush device according to an embodiment of the present disclosure.
FIG. 2 is a partial structural schematic diagram of a grooming brush device according to an embodiment of the present disclosure.
FIG. 3 is an enlarged view of region A in FIG. 2.
FIG. 4 is another partial structural schematic diagram of a grooming brush device according to an embodiment of the present disclosure.
FIG. 5 is a structural schematic diagram of a first brush head of a grooming brush device according to an embodiment of the present disclosure.
FIG. 6 is a structural schematic diagram of a second brush head of a grooming brush device according to an embodiment of the present disclosure.
FIG. 7 is a partial structural schematic diagram of a second brush head according to an embodiment of the present disclosure.
FIG. 8 is another partial structural schematic diagram of a second brush head according to an embodiment of the present disclosure.
FIG. 9 is a structural schematic diagram of a third brush head of a grooming brush device according to an embodiment of the present disclosure.
FIG. 10 is a partial structural schematic diagram of a third brush head according to an embodiment of the present disclosure.

### Description of reference numerals:

100: housing; 110: first accommodating cavity; 111: first limiting member; 112: first mounting portion; 120: handheld portion; 121: second accommodating cavity; 130: first transmission member; 140: second transmission member; 200: brush body; 210: push plate; 211: fourth protrusion member; 212: first notch; 213: second notch; 214: first plate member; 215: second plate member; 215a: third notch; 220: rebound member; 221: support member; 222: third spring; 230: bristles; 240: first comb body; 241: first comb teeth; 250: second comb body; 251: second comb teeth; 260: first passage; 300: inner plate; 310: first engaging structure; 320: first through hole; 330: second mounting portion; 331: second limiting member; 332: third limiting member; 400: push member; 410: second engaging structure; 420: second protrusion member; 430: first spring; 440: third protrusion member; 500: ejection assembly; 510: second spring; 600: air supply passage.

### DETAILED DESCRIPTION

To make the above objectives, features, and advantages of the present disclosure more apparent and comprehensible, the technical solutions in the embodiments of the present disclosure are clearly and completely described. Apparently, the described embodiments are merely a part, rather than all of the embodiments of the present disclosure. Based on the embodiments of the present disclosure, all other embodiments obtained by those of ordinary skill in the art without creative effort shall fall within the protection scope of the present disclosure.

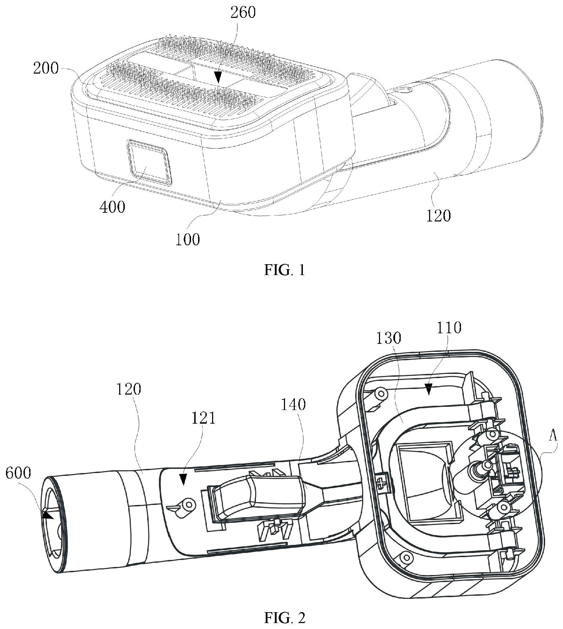

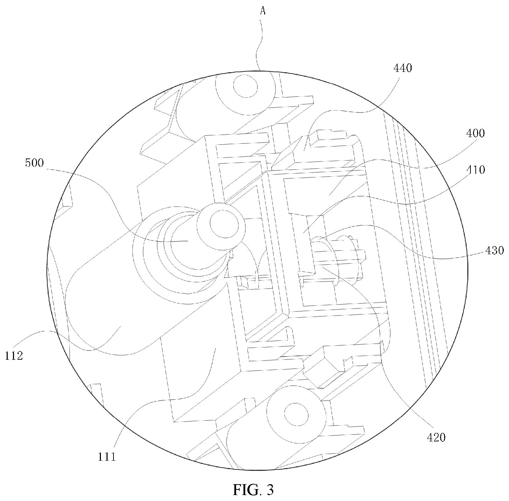

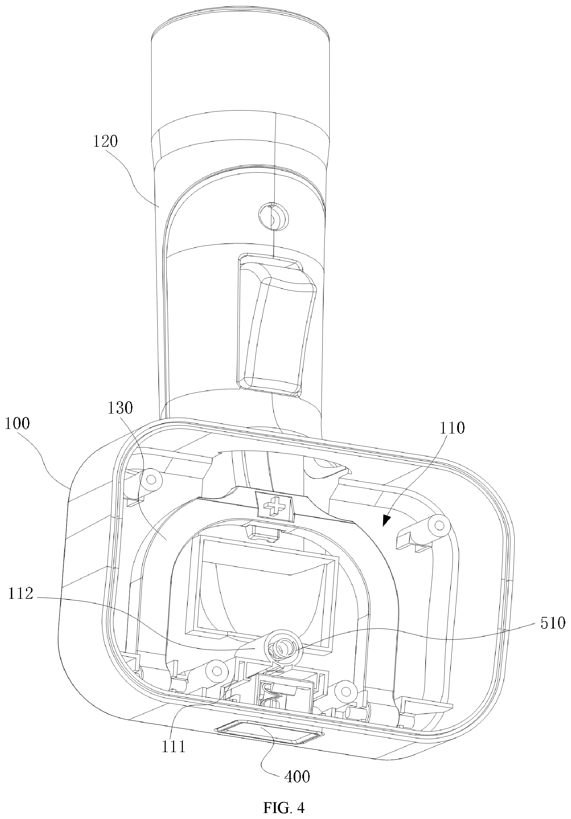

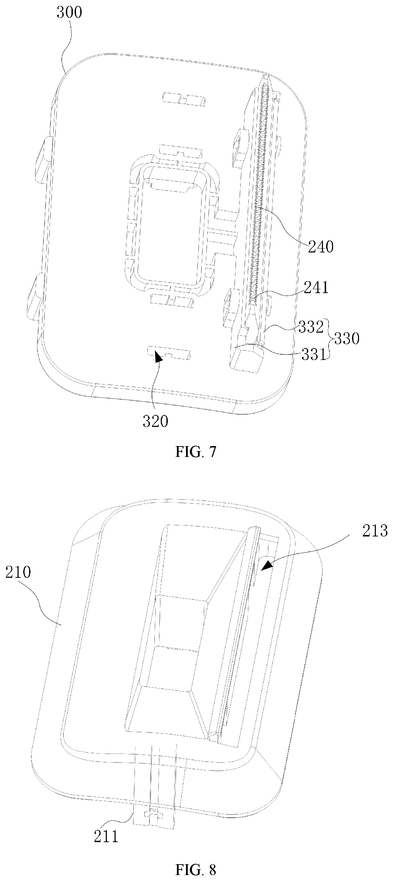

The technical solutions of the embodiments of the present disclosure will be described in detail below with reference to FIGs. 1-10.

As shown in FIGs. 1-10, the embodiments of the present disclosure provide a grooming brush device. The grooming brush device includes a housing 100, where the housing 100 is provided with a first accommodating cavity 110; a brush body 200, where the brush body 200 is mounted in the first accommodating cavity 110; an inner plate 300, where the inner plate 300 is disposed on the brush body 200, and the inner plate 300 is provided with a first engaging structure 310; and a push member 400, where the push member 400 is disposed on/in the housing 100, and the push member 400 is provided with a second engaging structure 410; when the brush body 200 and the push member 400 are in a locked state, the second engaging structure 410 engages with the first engaging structure 310, and when the brush body 200 and the push member 400 are in an unlocked state, the second engaging structure 410 is disengaged from the first engaging structure 310.

For example, in one aspect, through the engagement between the first engaging structure 310 and the second engaging structure 410, when the brush body 200 and the push member 400 are in the locked state, the first engaging structure 310 engages with the second engaging structure 410, and when the brush body 200 and the push member 400 are in the unlocked state, the first engaging structure 310 is disengaged from the second engaging structure 410, such that the brush body 200 is detachably disposed in the first accommodating cavity 110. Therefore, when the brush body 200 is damaged, the user only needs to replace the brush body with a new brush body 200, reducing the user's use cost. In another aspect, the detachable connection between the brush body 200 and the push member 400 enables the user, when the interior of the grooming brush device needs to be cleaned, to only press the push member 400 to separate the first engaging structure 310 from the second engaging structure 410, and then clean the interior of the grooming brush device, reducing the maintenance cost of the grooming brush device.

Preferably, with reference to FIGs. 2-5, one of the second engaging structure 410 and the first engaging structure 310 is provided with an engaging hole, the other one is provided with a first protrusion member adapted to the engaging hole, and the engaging hole engages with the first protrusion member to cause the brush body 200 and the push member 400 to be in the locked state.

For example, in one aspect, the first engaging structure 310 and the second engaging structure 410 enable the brush body 200 to be detachably disposed in the first accommodating cavity 110 through the engagement between the engaging hole and the first protrusion member, thereby facilitating mounting and detachment of the brush body 200 by the user. In another aspect, through the engagement between the engaging hole and the first protrusion member of the first engaging structure 310 and the second engaging structure 410, when the brush body 200 and the push member 400 are in the locked state, the push member 400 is firmly connected to the inner plate 300, thereby improving the stability of the brush body 200 when mounted in the first accommodating cavity 110.

Preferably, with reference to FIGs. 2-4, a first limiting member 111 is disposed in the first accommodating cavity 110, and the first limiting member 111 is provided with a groove; the push member 400 includes a second protrusion member 420, the second protrusion member 420 is provided with a first spring 430, and one end of the first spring 430 is connected to the first limiting member 111; and the push member 400 is provided with a third protrusion member 440, and the third protrusion member 440 engages with the groove.

For example, in one aspect, by providing the first spring 430 on the second protrusion member 420, the push member 400 is capable of automatically rebounding to the initial position after being pressed, reducing the operation difficulty for the user and improving the user experience. In another aspect, by providing the first limiting member 111 to limit the movement range of the push member 400, the stability of the push member 400 is ensured. The first limiting member 111 is provided with the groove, the push member is provided with the third protrusion member 440, and the third protrusion member 440 engages with the groove, thereby preventing the push member 400 from falling off the housing 100 and further improving the stability of the push member 400.

Further, with reference to FIGs. 2-4, the grooming brush device further includes an ejection assembly 500, and the ejection assembly 500 is disposed in the first accommodating cavity 110; the ejection assembly 500 includes a second spring 510, where the second spring 510 is sandwiched between the brush body 200 and the housing 100 to apply, to the brush body 200, a first elastic force that causes the brush body to disengage from the first accommodating cavity 110; and a first mating member (not shown in the figures), where the first mating member (not shown in the figures) is fixedly connected to one end of the second spring 510; a first mounting portion 112 is provided in the first accommodating cavity 110, and the first mounting portion 112 is configured for mounting the ejection assembly 500, such that when the brush body 200 and the push member 400 are in the locked state, the first mating member (not shown in the figures) and the brush body 200 abut against each other, and the second spring 510 is in a compressed state; and when the brush body 200 and the push member 400 are in the unlocked state, the second spring 510 is in a natural length state.

For example, in one aspect, by providing the ejection assembly 500 to cooperate with the push member 400, when the user presses the push member 400, the second spring 510 applies, to the brush body 200, a first elastic force that causes the brush body to disengage from the first accommodating cavity 110, such that the ejection assembly 500 pushes up the brush body 200, thereby facilitating the user in detaching the brush body 200 and improving the convenience of detaching the brush body 200. In another aspect, the ejection assembly 500 is disposed in the first accommodating cavity 110, such that when the brush body 200 is in the locked state, the ejection assembly 500 provides stable support for the brush body 200, further improving the stability of the brush body 200 when mounted in the first accommodating cavity 110.

Further, with reference to FIGs. 2-8, the inner plate 300 is provided with a first through hole 320, the housing 100 is provided with a handheld portion 120, the handheld portion 120 is provided with a second accommodating cavity 121, and the second accommodating cavity 121 is in communication with the first accommodating cavity 110; the brush body 200 includes a push plate 210, the push plate 210 is provided with a fourth protrusion member 211, and the fourth protrusion member 211 passes through the first through hole 320; the grooming brush device further includes a first transmission member 130, where the first transmission member 130 is disposed in the first accommodating cavity 110, and when the brush body 200 and the push member 400 are in the locked state, the first transmission member 130 and the fourth protrusion member 211 abut against each other; and a second transmission member 140, where the second transmission member 140 is disposed in the second accommodating cavity 121, and one end of the second transmission member 140 is fixedly connected to the first transmission member 130; and the first transmission member 130 cooperates with the second transmission member 140 to drive the push plate 210 to move close to or away from the inner plate 300.

For example, in one aspect, the push plate 210 is provided on the brush body 200, the push plate 210 is provided with the fourth protrusion member 211, the inner plate 300 is provided with the first through hole 320, and the fourth protrusion member 211 passes through the first through hole 320, such that the push plate 210 moves close to or away from the inner plate 300, thereby scraping off pet hair wound around the brush body 200. Therefore, the user does not need to manually remove the pet hair or hair debris on the brush body 200, improving the user experience. In another aspect, the first transmission member 130 is provided in the first accommodating cavity 110, the second transmission member 140 is provided in the second accommodating cavity 121, and the first transmission member 130 is fixedly connected to the second transmission member 140, such that the user can drive, at the handheld portion 120, the push plate 210 to move close to or away from the inner plate 300 through the first transmission member 130. When the user removes pet hair, contact between the user's hand and the pet hair on the brush body 200 is avoided, thereby improving the user experience.

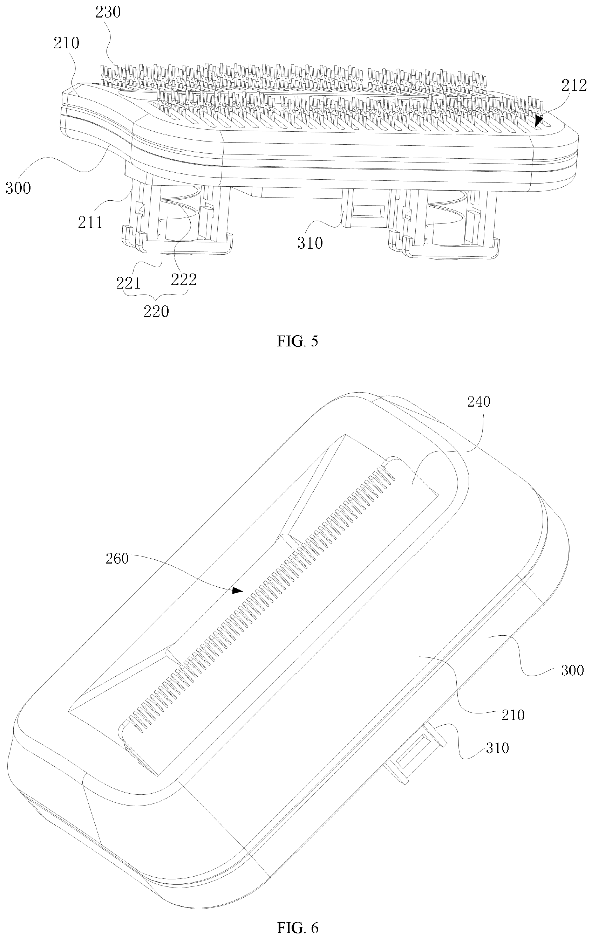

Further, as shown in FIG. 5, the brush body 200 is provided with a rebound member 220, where the rebound member 220 includes a support member 221, and the support member 221 is connected to the fourth protrusion member 211 through a snap-fit connection; and a third spring 222, where the third spring 222 is sandwiched between the support member 221 and the inner plate 300, such that when the push plate 210 moves away from the inner plate 300, the third spring 222 applies, to the push plate 210, a second elastic force that causes the push plate to move close to the inner plate 300.

For example, the brush body 200 is provided with the rebound member 220, the rebound member 220 is provided with the support member 221, the support member 221 is connected to the fourth protrusion member 211 through a snap-fit connection, and the third spring 222 is sandwiched between the support member 221 and the inner plate 300, such that after the user drives the push plate 210 to move away from the inner plate 300 through the first transmission member 130, the third spring 222 applies, to the push plate 210, the second elastic force that causes the push plate to move close to the inner plate 300. Therefore, the push plate 210 is capable of automatically rebounding to a position close to the inner plate 300, which facilitates operation by the user and improves the user experience.

Optionally, as shown in FIG. 5, the brush body 200 includes a first brush head, the first brush head is provided with bristles 230 arranged in an array, and the push plate 210 is provided with a first notch 212 capable of accommodating the bristles 230.

For example, in one aspect, by providing the first brush head with bristles 230 arranged in an array, the contact area between the brush body 200 and the pet is increased, and the cleaning efficiency is thus improved. In another aspect, the push plate 210 is provided with the notch 212 capable of accommodating the bristles 230, such that the push plate 210 is capable of scraping off pet hair wound around the bristles 230, which facilitates cleaning of the bristles 230 by the user and improves the convenience of cleaning the bristles 230.

Optionally, with reference to FIGs. 6-8, the brush body 200 includes a second brush head provided with a first comb body 240, and first comb teeth 241, where the first comb teeth 241 are disposed on the first comb body 240; the push plate 210 includes a second notch 213, and the second notch 213 is capable of accommodating the first comb body 240; the inner plate 300 includes a second mounting portion 330, and the second mounting portion 330 is provided with a second limiting member 331 and a third limiting member 332 that engage with each other, where one of the second limiting member 331 and the third limiting member 332 is provided with a first connecting hole, the other one is provided with a first connecting member adapted to the first connecting hole, and the first connecting hole engages with the first connecting member, such that the first comb body 240 is detachably sandwiched between the second limiting member 331 and the third limiting member 332.

For example, in one aspect, the second brush head is provided with the first comb body 240, and the comb body 240 is provided with the first comb teeth 241, such that when the user uses the grooming brush device to groom pet hair, skin flakes or foreign matters attached to the pet hair can also be removed, thereby improving the use efficiency of the grooming brush device. In another aspect, the push plate 210 is provided with the second notch 213 for accommodating the first comb body 240, such that the user is capable of removing pet hair wound around the first comb body 240 through the push plate 210, thereby improving the convenience of the grooming brush device. Finally, the first connecting hole engages with the first connecting member, such that the first comb body 240 is detachably sandwiched between the second limiting member 331 and the third limiting member 332. Therefore, when the first comb body 240 is damaged, the user only needs to replace the comb body with a new first comb body 240, thus reducing the user's use cost.

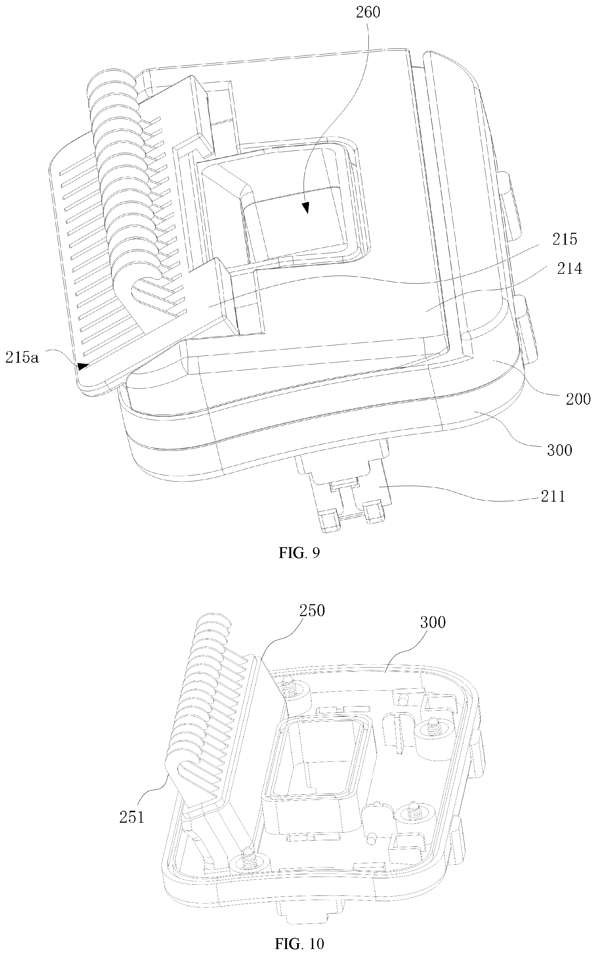

Optionally, with reference to FIGs. 9 and 10, the brush body 200 includes a third brush head, and the third brush head includes a second comb body 250, where the second comb body 250 is disposed on the inner plate 300; and second comb teeth 251, where the second comb teeth 251 are disposed on the second comb body 250, and the second comb teeth 251 are provided with bent portions; the push plate 210 includes a first plate member 214 and a second plate member 215, where the second plate member 215 and the first plate member 214 are connected through a snap-fit connection, and the second plate member 215 is provided with a third notch 215a capable of accommodating the second comb body 250; and the first plate member 214 cooperates with the second plate member 215 to cause the second plate member 215 to reciprocate in the extension direction of the second comb teeth 251.

For example, in one aspect, the third brush head is provided with the second comb body 250, the second comb body 250 is provided with the second comb teeth 251, and the second comb teeth 251 are provided with the bent portions, such that when the user uses the grooming brush device to groom pet hair, hair shed from the pet can also be removed, thereby improving the performance of the grooming brush device. In another aspect, the push plate 210 is provided with the first plate member 214 and the second plate member 215, the second plate member 215 is provided with the third notch 215a for accommodating the second comb teeth 251, and the first plate member 214 cooperates with the second plate member 215 to cause the second plate member 215 to reciprocate in the extension direction of the second comb teeth 251, such that when the user removes pet hair wound around the second comb teeth 251, the pet hair wound around the bent portions can also be scraped off, thereby improving the convenience of the grooming brush device.

Further, with reference to FIGs. 1-9, the grooming brush device includes an air supply passage 600, the air supply passage 600 is disposed on/in the housing 100, and the air supply passage 600 is in communication with the first accommodating cavity 110; the brush body 200 is provided with a first passage 260, and the first passage 260 is in communication with the first accommodating cavity 110; and one end, distal to the brush body 200, of the handheld portion 120 is configured for mounting a vacuum cleaner, such that when the vacuum cleaner performs an air suction operation, the airflow sequentially passes through the first passage 260, the first accommodating cavity 110, and the air supply passage 600.

For example, the housing 100 is provided with the air supply passage 600 in communication with the vacuum cleaner, and the air supply passage 600 is in communication with the first accommodating cavity 110; the brush body 200 is provided with the first passage 260, and the first passage 260 is in communication with the first accommodating cavity 110; and the end, distal to the brush body 200, of the handheld portion 120 is configured for mounting the vacuum cleaner, such that when the vacuum cleaner performs an air suction operation, the airflow sequentially passes through the first passage 260, the first accommodating cavity 110, and the air supply passage 600. Therefore, the vacuum cleaner collects the hair scraped off from the brush body 200, thereby avoiding environmental pollution caused by pet hair and transmission of allergens.

Finally, it should be noted that the above embodiments are merely intended to describe the technical solutions of the present disclosure, rather than to limit the present disclosure. Although the present application has been described in detail with reference to the foregoing embodiments, those of ordinary skill in the art should understand that they may still make modifications to the technical solutions described in the foregoing embodiments, or make equivalent replacements to part of the technical features therein; and these modifications or replacements do not make the essence of the corresponding technical solutions depart from the spirit and scope of the technical solutions of the embodiments of the present disclosure.

## Claims

1. A grooming brush device, comprising:
a housing (100), the housing (100) being provided with a first accommodating cavity (110);
a brush body (200), the brush body (200) being mounted in the first accommodating cavity (110);
an inner plate (300), the inner plate (300) being disposed on the brush body (200), and the inner plate (300) being provided with a first engaging structure (310); and
a push member (400), the push member (400) being disposed in the housing (100), and the push member (400) being provided with a second engaging structure (410),
wherein when the brush body (200) and the push member (400) are in a locked state, the second engaging structure (410) engages with the first engaging structure (310), and when the brush body (200) and the push member (400) are in an unlocked state, the second engaging structure (410) is disengaged from the first engaging structure (310).

2. The grooming brush device according to claim 1, wherein
one of the second engaging structure (410) and the first engaging structure (310) is provided with an engaging hole, the other one is provided with a first protrusion member adapted to the engaging hole, and the engaging hole engages with the first protrusion member so that the brush body (200) and the push member (400) are in the locked state.

3. The grooming brush device according to claim 1, wherein a first limiting member (111) is disposed in the first accommodating cavity (110), and the first limiting member (111) is provided with a groove;
the push member (400) comprises:
a second protrusion member (420), the second protrusion member (420) being provided with a first spring (430), and one end of the first spring (430) being connected to the first limiting member (111); and
the push member (400) is provided with a third protrusion member (440), and the third protrusion member (440) is configured to engage with the groove.

4. The grooming brush device according to claim 1,
further comprising:
an ejection assembly (500), the ejection assembly (500) being disposed in the first accommodating cavity (110);
the ejection assembly (500) comprising:
a second spring (510), the second spring (510) being sandwiched between the brush body (200) and the housing (100) to apply, to the brush body (200), a first elastic force that causes the brush body to disengage from the first accommodating cavity (110); and
a first mating member, fixedly connected to one end of the second spring (510),
wherein a first mounting portion (112) is provided in the first accommodating cavity (110), and the first mounting portion (112) is configured for mounting the ejection assembly (500), such that when the brush body (200) and the push member (400) are in the locked state, the first mating member and the brush body (200) abut against each other, and the second spring (510) is in a compressed state; and when the brush body (200) and the push member (400) are in the unlocked state, the second spring (510) is in a natural length state.

5. The grooming brush device according to claim 1, wherein the inner plate (300) is provided with a first through hole (320), and the housing (100) is provided with a handheld portion (120), the handheld portion (120) being provided with a second accommodating cavity (121), and the second accommodating cavity (121) being in communication with the first accommodating cavity (110);
the brush body (200) comprises:
a push plate (210), the push plate (210) being provided with a fourth protrusion member (211), and the fourth protrusion member (211) passing through the first through hole (320); and
the grooming brush device further comprises:
a first transmission member (130), wherein the first transmission member (130) is disposed in the first accommodating cavity (110), and when the brush body (200) and the push member (400) are in the locked state, the first transmission member (130) and the fourth protrusion member (211) abut against each other; and
a second transmission member (140), the second transmission member (140) being disposed in the second accommodating cavity (121), and one end of the second transmission member (140) being fixedly connected to the first transmission member (130),
wherein the first transmission member (130) is configured to cooperate with the second transmission member (140) to drive the push plate (210) to move close to or away from the inner plate (300).

6. The grooming brush device according to claim 5, wherein the brush body (200) is provided with a rebound member (220), the rebound member (220) comprising:
a support member (221), the support member (221) is configured to be connected to the fourth protrusion member (211) through a snap-fit connection; and
a third spring (222), the third spring (222) being sandwiched between the support member (221) and the inner plate (300), such that when the push plate (210) moves away from the inner plate (300), the third spring (222) applies, to the push plate (210), a second elastic force that causes the push plate to move close to the inner plate (300).

7. The grooming brush device according to claim 5, wherein the brush body (200) comprises a first brush head, the first brush head is provided with bristles (230) arranged in an array, and the push plate (210) is provided with a first notch (212) capable of accommodating the bristles (230).

8. The grooming brush device according to claim 5, wherein
the brush body (200) comprises:
a second brush head, the second brush head being provided with a first comb body (240); and
first comb teeth (241), the first comb teeth (241) being disposed on the first comb body (240);
the push plate (210) comprises:
a second notch (213), the second notch (213) being capable of accommodating the first comb body (240); and
the inner plate (300) comprises:
a second mounting portion (330), the second mounting portion (330) being provided with a second limiting member (331) and a third limiting member (332) that engage with each other,
wherein one of the second limiting member (331) and the third limiting member (332) is provided with a first connecting hole, the other one is provided with a first connecting member adapted to the first connecting hole, and the first connecting hole is configured to engage with the first connecting member, such that the first comb body (240) is detachably sandwiched between the second limiting member (331) and the third limiting member (332).

9. The grooming brush device according to claim 5, wherein the brush body (200) comprises a third brush head,
the third brush head comprising:
a second comb body (250), the second comb body (250) being disposed on the inner plate (300); and
second comb teeth (251), the second comb teeth (251) being disposed on the second comb body (250), and the second comb teeth (251) being provided with bent portions;
the push plate (210) comprises:
a first plate member (214); and
a second plate member (215), wherein the second plate member (215) is connected to the first plate member (214) through a snap-fit connection, and the second plate member (215) is provided with a third notch (215a) capable of accommodating the second comb body (250); and
the first plate member (214) is configured to cooperate with the second plate member (215) to cause the second plate member (215) to reciprocate in an extension direction of the second comb teeth (251).

10. The grooming brush device according to any one of claims 5-9,
comprising:
an air supply passage (600), the air supply passage (600) being disposed in the housing (100), and the air supply passage (600) being in communication with the first accommodating cavity (110),
wherein the brush body (200) is provided with a first passage (260), and the first passage (260) is in communication with the first accommodating cavity (110); and
one end, distal to the brush body (200), of the handheld portion (120) is configured for mounting a vacuum cleaner, such that when the vacuum cleaner performs an air suction operation, an airflow sequentially passes through the first passage (260), the first accommodating cavity (110), and the air supply passage (600).
